# EUROPEAN PATENT APPLICATION

(11) **EP 4 838 738 A1**
(43) Date of publication of application: **11.11.2026**
(21) Application number: 25174151.8
(22) Date of filing: 05.05.2025
(51) Int. Cl.: H02J 3/14, H02J 13/00, H05B 39/04

(54) **AN ELECTRONIC SWITCHING DEVICE**

(71) Applicant: Plejd AB, 431 37 Mölndal (SE)
(72) Inventor: JOSEFSSON, Gustav, 439 31 ONSALA (SE)
(74) Representative: Kransell & Wennborg KB

(57) **Abstract**

The present disclosure relates to an electronic switching device configured to be connected to a power source and a load. In particular, the present disclosure introduces a methodology for detecting whether a current is flowing through to a connected load when a switching unit comprised with the electronic switching device is arranged in a disconnected state. The present disclosure also relates to a corresponding method for operating an electronic switching device.

## Description

### TECHNICAL FIELD

The present disclosure relates to an electronic switching device configured to be connected to a power source and a load. In particular, the present disclosure introduces a methodology for detecting whether a current is flowing through to a connected load when a switching unit comprised with the electronic switching device is arranged in a disconnected state. The present disclosure also relates to a corresponding method for operating an electronic switching device.

### BACKGROUND

Smart plugs and power monitoring devices are commonly used to remotely control and monitor electrical appliances. Such devices typically include a controllable switching unit, often implemented as a relay or a solid-state switch, which allows the user or a control system to activate or deactivate power delivery to a connected load, such as a lamp or a television. It is also well known in the art to include energy monitoring capabilities in smart plugs. These capabilities are typically based on the measurement of current and/or voltage in order to calculate instantaneous power, energy consumption, or related parameters of the connected load.

A further development of a smart plug is presented in EP3358692A1, which discloses a plug-based monitoring system capable of high-frequency sampling of current and voltage in order to derive advanced feature sets. These feature sets are used to assess the behavior of the connected load, detect faults, and infer device performance over time. The plug-based monitoring system EP3358692A1 further comprises a processor configured to switch the connected appliance on or off based on the analysis. The control logic can reside locally or be cloud-connected via a communication module.

While EP3358692A1 presents an interesting solution for monitoring appliance performance and making control decisions based on usage data, the plug-based monitoring system of EP3358692A1 focuses on monitoring current when the plug-based monitoring system is actively delivering power to the connected load. However, it may in some cases be desirable to expand the functionality to allow for even further control of the connected load as well as for providing enriched user feedback. Taking the above into account, there appears to be a need for further development of smart switching devices, allowing for monitoring of the connected load even when the smart switching device is in an off-state, thereby enabling improved decision-making, automation logic, and user interaction.

### SUMMARY

According to an aspect of the present disclosure, the above is at least partly met by an electronic switching device configured to be connected to a power source and a load, the electronic switching device comprising a first switching unit configured to switch between a connected and disconnected state to selectively provide a first connection between the power source and the load for activating the load, a processing unit, and a first sensing unit connected to the processing unit, wherein the first sensing unit is configured to detect whether a current is flowing through a second connection between the power source and the load when the first switching unit is in the disconnected state, and the first connection between the power source and the load is provided separate from the second connection between the power source and the load.

The present disclosure is based on the understanding that in certain use cases, it may be desirable to monitor the electrical state of a load even when an internal switching unit of a smart plug or similar device is in an open, i.e., disconnected state. Traditional monitoring approaches only allow detection of load conditions when the internal switching unit is closed, and power actively flows through the device. Consequently, traditional systems are typically unable to capture load-side changes that occur independently of the internal switching state, such as manual operation of an external switch connected in series with the load.

Within the context of the present disclosure, the expression "separate connection" should be understood to refer to a conductive path from the power source to the load that does not pass through the first switching unit but which can nonetheless allow a measurable current to flow, thereby enabling detection by the first sensing unit even when the first switching unit is open. The separate connection may comprise a high-impedance path or a direct coupling facilitated by the configuration of the load-side circuitry.

Advantages following the implementation of the electronic switching device according to the present disclosure include improved control of connected loads, enhanced user feedback regarding the connection state of the load, and the ability to adapt switching behavior based on detected conditions. Moreover, the solution enables richer automation logic and reduces the risk of mismatch conditions between an intended control action of a user and the actual electrical state of the load.

Possibly, the electronic switching device is provided as a standalone unit, such as a so-called smart plug, capable of being inserted between a wall outlet and the load. However, the electronic switching device according to the present disclosure may alternatively be integrated as part of other electrical infrastructure components. For example, it may be embodied as part of a wall socket, an in-wall module, an electrical connection plug, or a power distribution unit. In some embodiments, the functionality may also be incorporated within a smart lighting system, a power rail, or embedded in appliance-side connection hardware. Such flexibility in physical integration allows the disclosed functionality to be tailored to both retrofit and new-build applications.

Preferably, a flow of current through the first sensing unit indicates a state of connection between the electronic switching device and the connected load. Such an arrangement may be achieved by configuring the first sensing unit to generate a measurable output signal indicative of current presence through the second connection. The output signal may, for example, comprise a voltage that exceeds a predefined threshold value when current flows through the first sensing unit. The processing unit may be configured to interpret the presence of such a signal as indicating that the load is electrically connected, even when the first switching unit is in its disconnected state.

Advantages associated with the present embodiment may for example include a reliable determination of the connection status of the load without the need to energize the first connection. Moreover, detection based on current flow offers robustness against fluctuations in external electrical parameters and provides a clear, binary indication that can be used to trigger subsequent control logic, automation events, or user notifications.

Furthermore, in line with the present disclosure, the electronic switching device may be arranged to comprise a second sensing unit connected to the processing unit, wherein the second sensing unit is arranged in series with the first switching unit and adapted to detect whether a current is flowing through the first connection between the power source and the load when the first switching unit is in the connected state. Accordingly, the second sensing unit may in some embodiments be implemented as a current-sensing resistor or a non-invasive current sensor positioned directly in the primary current path through the first switching unit. By monitoring the current flow through the first connection, the second sensing unit may be configured to provide real-time feedback on whether electrical power is being actively delivered to the load when the first switching unit is closed. The sensed current value may for example be analyzed by the processing unit to verify that the load is operating as expected, or to trigger additional actions depending on the detected load behavior.

By arranging the second sensing unit in the suggested manner, it may be possible to enable an improved supervision of load activation events, offers a secondary validation path for detecting load presence or absence, and allows for enhanced safety and diagnostic functionality within the switching device.

Preferably, the first sensing unit is electrically connected in parallel with the first switching unit. As such, the first sensing unit is connected between the same electrical nodes as the first switching unit, such that it shares the same voltage differential across its terminals, thereby ensuring that the sensing function remains active independently of the state of the first switching unit, thereby enabling continuous monitoring of the connection state of the load even when the first switching unit is open.

The suggested parallel configuration allows for integration of the sensing circuitry without interfering with the primary switching function. Furthermore, by exposing the first sensing unit to the full voltage difference between the source and the load, the detection sensitivity can be optimized while keeping the power consumption of the sensing circuit low, especially if a high-impedance sensing element is used for the first sensing unit. Such an approach also simplifies the physical layout of the device and supports compact and cost-efficient designs.

Preferably, the second sensing unit comprises a current sensing resistor adapted to generate a voltage representative of a current flowing through the first connection when the first switching unit is in the connected state. Accordingly, when the first switching unit is closed, a current flowing through the load generates a proportional voltage drop across the current sensing resistor, whereby the voltage can be measured and processed to determine whether the load is actively drawing power and, optionally, to estimate the magnitude of the current.

The use of a current sensing resistor provides a simple, robust, and cost-effective means for current detection, requiring minimal additional components and is straightforward to integrate into conventional switching device topologies. Moreover, by selecting an appropriate resistance value, the sensing impact on the overall system impedance can be minimized, thereby ensuring that the primary function of delivering power to the load remains unaffected while maintaining high accuracy in current detection.

Furthermore, as an alternative (or also) the second sensing unit may comprise a Hall-effect sensor adapted to detect a magnetic field generated by a current flowing through the first connection when the first switching unit is in the connected state. As such, when the first switching unit is closed and current flows to the load, the Hall-effect sensor generates an output signal proportional to the strength of the magnetic field, which can then be interpreted by the processing unit to assess the current flow. The use of a Hall-effect sensor provides a galvanically isolated measurement of current, which in some possible embodiments may be advantageous when enhanced electrical safety is required, or where minimal intrusion into the main power path is desired. Moreover, Hall-effect sensing enables detection over a wider dynamic range of currents and can be positioned flexibly within the device layout.

In an embodiment, the first sensing unit comprises a voltage divider circuit. Accordingly, in such an embodiment the voltage divider circuit is configured to generate a proportional voltage signal representing the potential difference between the power source and the load, where the voltage signal can be monitored by the processing unit to detect whether a current path exists through the load, even when the first switching unit is open.

To minimize power consumption and avoid introducing a significant leakage path that could affect the load behavior or system efficiency, the total resistance of the voltage divider is preferably selected to be in comparison high, such as at least 1 MΩ. A high-resistance voltage divider ensures that only a negligible current flows through the sensing circuit, thereby maintaining energy efficiency and electrical safety, while still enabling reliable detection of the load connection state.

In line with the present disclosure, the processing unit may in some embodiments be configured to determine the state of connection between the electronic switching device and the load based on whether a voltage measured by the first sensing unit exceeds a predefined threshold. Accordingly, if the measured voltage exceeds the threshold, the processing unit interprets this as an indication that the load is electrically connected via the second connection. Conversely, if the voltage remains below the threshold, the load may be considered disconnected.

Such an approach provides a simple and reliable mechanism for detecting the connection state based on standard voltage comparison techniques, also allowing for flexible adaptation to different types of loads and sensing configurations by appropriately setting the threshold level. Moreover, using a predefined threshold offers robustness against noise and small signal fluctuations, thereby improving detection accuracy and reducing the risk of false triggering.

Additionally, in some embodiments the processing unit may be configured to switch the first switching unit in response to a detected change in the state of connection between the electronic switching device and the load. For example, when a transition is detected indicating that the load has been manually switched on via an external switch, the processing unit may close the first switching unit to establish the primary connection and ensure reliable power delivery to the load. Similarly, if a disconnection of the load is detected, the processing unit may open the first switching unit to save energy or to synchronize the internal switching state with the actual load state. Accordingly, such a functionality reduces the risk of mismatch conditions between user expectations and the actual operational status of the load.

In a possible embodiment, the processing unit is configured to switch the first switching unit based on a detected change in the current flowing through the first connection between the power source and the load. As such, for example an "unexpected absence of current flow" while the switching unit is closed may indicate that the load has been manually turned off or disconnected, prompting the processing unit to open the switching unit. Conversely, a "sudden increase in current" may trigger the switching unit to remain closed or to reinforce a connected state. Such a dynamic control based on actual current measurements allows the electronic switching device to respond to manual handling of the connected load/device in a more reliable manner, preferably improving the synchronization between the operational status of the load and the internal switching behavior.

According to another aspect of the present disclosure there is provided a method for operating an electronic switching device, the electronic switching device comprising a first switching unit configured to switch between a connected and disconnected state to selectively connect a power source and a load for activating the load, a processing unit, and a current sensing unit connected to the processing unit, wherein the method comprises the steps of receiving a current switch state of the first switching unit, receiving information indicative of a state of connection between the electronic switching device and the load, and switching the first switching unit based on a detected change in the state of connection between the electronic switching device and the load and the current switch state of the first switching unit.

In accordance with the present disclosure, it may be possible to provide enhanced control and synchronization between a smart plug and a connected load can be achieved by monitoring both the internal switching state and an external indication of the connection status of the load. Specifically, unlike conventional systems which typically rely solely on the switch state or instantaneous current draw, the present disclosure enables improved decision-making by combining these two pieces of information, thereby allowing the switching logic to respond dynamically to user actions or load behavior, even in systems not originally designed for such functionality. As such, within the context of the present disclosure, the expression "state of connection" should be interpreted broadly to cover any detectable electrical state indicative of whether the load is electrically connected, operational, or drawing current, regardless of how such information is obtained.

Advantages associated with the method according to the present disclosure include the ability to provide even existing smart plugs/sockets with further enhanced functionality without requiring hardware modification. Such enhanced control strategies may for example be implemented in external systems such as hubs or servers, and the facilitation of more intelligent load management without increasing the complexity or cost of individual switching devices.

In some embodiments, the method according to the present disclosure further comprises the steps of determining a mismatch between the current switch state of the first switching unit and the state of connection between the electronic switching device and the load and generating a notification indicative of the mismatch. The electronic switching device or the above-mentioned system may also or additionally transfer the notification to a user device, log the notification locally, or forwarded to a management server for further action.

The implementation according to the present embodiment allows for example for improved user awareness and system transparency. Specifically, by actively monitoring and signaling discrepancies between expected and actual load behavior, the electronic switching device or connected system can assist in diagnosing user errors (such as forgetting to manually turn on a lamp), detect faulty or improperly wired loads, and enhance the overall robustness of automation systems relying on accurate device status information.

Furthermore, in a possible embodiment the information indicative of the state of connection between the electronic switching device and the load is derived from a current measured when the first switching unit is in the disconnected state. As such, the measured current may be analyzed to conclude whether an alternative conductive path exists, such as through an externally operated switch associated with the load, thus enabling the solution according to the present disclosure to detect user interactions or external switching events without requiring active power delivery through the main switching path. As a result, it facilitates more accurate tracking of the load status, supports advanced automation scenarios, and enhances user feedback without imposing additional electrical load or modifying the primary switching behavior.

Additionally, it may in some embodiments the information indicative of the state of connection between the electronic switching device and the load is derived from a current measured when the first switching unit is in the connected state. In such an embodiment, the processing unit may for example rely on current measurements taken when the switching unit is actively connecting the power source and the load. A sudden loss of current while the switch remains closed may be interpreted as a manual disconnection or malfunction on the load side.

In some embodiments it may be possible for at least one of the receiving, determining, or switching steps to be performed in an external device communicatively connected to the electronic switching device. Possibly, a hub, cloud server, or another external system may be adapted to handle decision-making processes based on data received from the electronic switching device, allowing for computationally intensive tasks or complex automation logic to be offloaded from the actual electronic switching device itself, reducing hardware complexity and possibly enabling broader set of functions.

Preferably, the method according to the present disclosure further comprises the step of transmitting the notification over a network connection to a user device. For example, by means of the present embodiment it may be possible to immediately inform a user through a smartphone, tablet, or other connected device, thus providing real-time feedback regarding the operational status of connected load.

In an embodiment, determining the state of connection between the electronic switching device and the load comprises the step of comparing a measured value to a predefined threshold. As an example, the processing unit may, for instance, compare a sensed voltage or current value against a stored reference threshold to evaluate whether the load is electrically connected.

In line with the present disclosure, the method may in some embodiments further comprise the step of delaying the switching of the first switching unit for a predefined period following the detected change. Introducing a deliberate delay following the detection of a change can prevent unnecessary or premature switching operations caused by transient phenomena such as momentary voltage dips or inrush currents, thereby allowing the system ensures that only persistent and significant changes in the load state trigger actual switching.

Additionally, in some embodiments the method further comprises the step of switching the first switching unit back to a previous state in response to a reversal of the detected change. As an example, the electronic switching device may automatically revert to its prior state if it detects that an earlier change in load connection state was temporary or accidental. For example, if a manual load switch is toggled briefly before returning to its original position, the implementation according to the present disclosure may restore the first switching unit to its former setting, preserving intended device behavior and minimizing unintended disruptions.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Fig. 1 illustrates a conceptual implementation of the electronic switching device according to a currently preferred embodiment of the present disclosure,
Figs. 2A and 2B show detailed views of possible electrical implementation of elements of the electronic switching device of the present disclosure, and
Fig. 3 is a flow chart illustrating the exemplary steps for operating the electronic switching device as shown in Fig. 1.

### DETAILED DESCRIPTION

The present disclosure will now be described more fully hereinafter with reference to the accompanying drawings, in which currently preferred embodiments of the present disclosure are shown. The present disclosure may, however, be embodied in many different forms and should not be construed as limited to the embodiments set forth herein; rather, these embodiments are provided for thoroughness and completeness to fully convey the scope of the present disclosure to the skilled addressee. Like reference characters refer to like elements throughout.

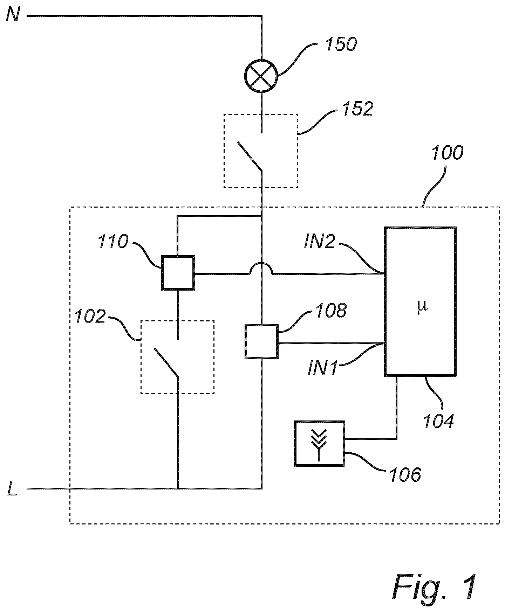

Referring now to the drawings and Fig. 1 in particular, there is conceptually depicted an electronic switching device 100 according to an embodiment of the present disclosure. The electronic switching device 100 is configured to be connected between a power source (in the illustrated example, an alternating power source with mains lines L and N) and a load 150, such as a lamp or other electrical appliance. It should be noted, however, that the electronic switching device 100 may also be implemented in systems using a direct current (DC) power source, with suitable adaptation of the switching and sensing components as required. In the embodiment as presented in Fig. 1, the load 150 does not form part of the electronic switching device 100.

The electronic switching device 100 comprises a first switching unit 102 arranged to selectively provide or interrupt a first connection between the power source and the load 150. The first switching unit 102 may for example be implemented as a relay, triac, or any other electrically controllable switch suitable for interrupting current flow in the first connection. In some embodiments, the first switching unit 102 may further be adapted to provide variable power control, such as dimming functionality, particularly in cases where the load 150 comprises a light source or another device responsive to modulation of supply power.

The processing unit 104 may include a microprocessor, microcontroller, programmable digital signal processor, or another programmable device. In other embodiments, the processing unit 104 may be implemented using an application-specific integrated circuit (ASIC), a field-programmable gate array (FPGA), a programmable logic device, or a digital signal processor (DSP). When implemented as a programmable device, the processing unit 104 may further include or be coupled to memory comprising computer-readable instructions which, when executed, cause the device to perform decision-making, control, and communication routines associated with the operation of the electronic switching device 100.

To enable external communication, the electronic switching device 100 may optionally include for example a wireless transceiver 106. The wireless transceiver 106 is operatively connected to the processing unit 104 and may be configured for communication over one or more wireless protocols, such as Bluetooth, Wi-Fi (WLAN), Zigbee, Z-Wave, or other suitable protocols. In some implementations, communication may occur over the 2.4 GHz or 5 GHz ISM bands, although other frequency bands may also be used depending on regulatory and system-specific requirements. The wireless transceiver 106 may support bidirectional communication with external control systems, mobile applications, smart home hubs, or cloud-based services, enabling dynamic interaction and status monitoring.

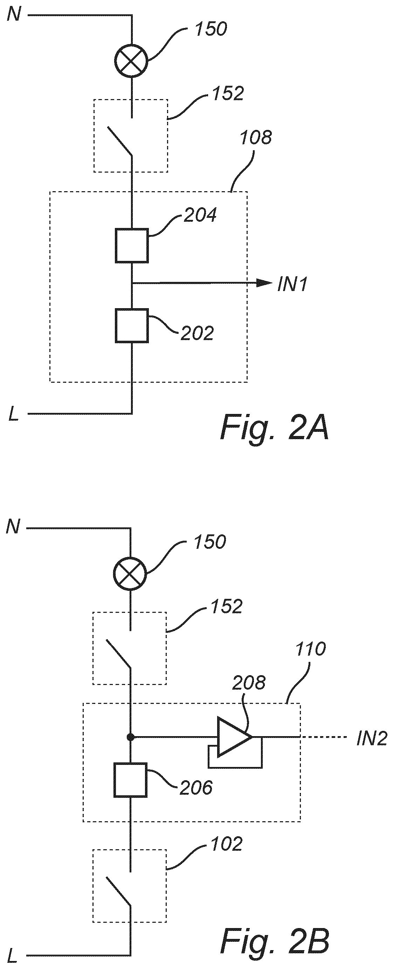

The electronic switching device 100 additionally comprises a first sensing unit 108, which is connected to the processing unit 104 at an input interface IN1. The first sensing unit 108 is arranged to monitor a second connection between the power source and the load 150. In the illustrated embodiment, the second connection bypasses the first switching unit 102 and enables the detection of a current flow to the load 150 even when the first switching unit 102 is in its disconnected state, thereby allowing the processing unit 104 to infer that the load 150 is being powered by another external switching means, for example a switch 152 connected to the load 150, such as a switch arranged at an electrical connection to the load 150. In line with the present disclosure, the detection may for example be accomplished using a high-impedance sensing mechanism, such as a voltage divider with resistors in the MΩ range, as will be further exemplified in relation to Fig. 2.

Optionally, the electronic switching device 100 may also comprise a second sensing unit 110 arranged in series with the first switching unit 102. The second sensing unit 110 is adapted to monitor the current flow through the first connection, i.e., when the first switching unit 102 is in its connected state. Such an implementation enables the processing unit 104 to determine whether current is actually being drawn by the load 150 during normal operation of the device 100. Similarly to the first sensing unit 108, also the second sensing unit 110 is connected to an input interface IN2 of the processing unit 104.

Based on the measurements from the sensing units 108 and 110, the processing unit 104 may determine whether to override, maintain, or defer switching actions. For example, if an external switch is detected to be in use, the processing unit 104 may temporarily suppress scheduled automation routines, initiate safety actions, or issue a user notification via the transceiver 106. Also, in some embodiments, the processing unit 104 may further be configured to apply default switching behavior upon restart, power failure, or loss of communication, based on previously stored state data or current sensor input, thereby enhancing reliability and user experience.

Although not illustrated in Fig. 1, the electronic switching device 100 may optionally comprise a local user control interface, such as a momentary switch or rotary dial, configured to interact with the processing unit 104. Such local control members may be used to initiate manual switching commands or to override automation sequences temporarily.

Turning now to Fig. 2A, there is presented a detailed view of a preferred implementation of the first sensing unit 108. In the illustrated embodiment, the first sensing unit 108 comprises a voltage divider network formed by two high-value resistors 202 and 204. Each resistor is preferably selected to have a resistance in the MΩ range, ensuring that only a negligible current is drawn through the sensing path, maintaining electrical safety, regulatory compliance, and minimizing any unintended influence on the operation of the load 150.

The divided voltage from the voltage divider is preferably connected to an analog input port of the processing unit 104, such as the above mentioned IN1, which may optionally include internal or external filtering elements to suppress noise and improve signal stability. The processing unit 104 is configured to continuously or periodically sample this signal and compare it against a predefined threshold value stored in memory. If the sensed voltage exceeds the threshold, it is interpreted as an indication that a current is flowing through the second connection, thereby establishing that the external switch 152 is closed and the load 150 is energized even though the first switching unit 102 is in its disconnected state. Additional protective elements, such as for example series diodes, clamping diodes, or transient voltage suppressors, may be used to protect the analog input IN1 from overvoltage conditions.

Fig. 2B illustrates a detailed view of a preferred implementation of the second sensing unit 110. In the illustrated embodiment, the second sensing unit 110 is arranged to detect current flowing through the first connection, i.e., when the first switching unit 102 is in its connected state. The implementation, as conceptually presented, is based on a current sensing resistor 206 placed in series with the first switching unit 102. A voltage drop across the current sensing resistor 206, which is proportional to the current through the load 150, is amplified by an operational amplifier 208. The output from the operational amplifier 208 is routed to the input interface IN2 of the processing unit 104 for analog-to-digital conversion and analysis. Based on the amplified signal, the processing unit 104 can estimate the magnitude of the current drawn by the load 150 and use this information for monitoring power consumption, detecting anomalies, or triggering switching logic.

In a possible embodiment and for improving signal quality and reliability, the amplifier stage may be supplemented by RC low-pass filtering, as well as decoupling capacitors on the supply lines. Optionally, gain-setting resistors may be configured to provide application-specific scaling for the sensed current range.

While Figs. 2A and 2B depict exemplary implementations using passive and resistive sensing components, other variants are also conceivable. For example, the first sensing unit 108 may be implemented using capacitive or optically isolated voltage detection circuits, providing additional flexibility in system design. Furthermore, the amplification and signal conditioning circuits may be adapted to include hysteresis or adaptive thresholds to enhance noise immunity and allow user-configurable sensitivity.

Similarly, the second sensing unit 110 may instead comprise a Hall-effect sensor or another magnetic field-based sensing device arranged proximate to the current-carrying conductor. Such an approach enables galvanic isolation and may be preferred in systems requiring electrical separation or minimal power loss.

In some embodiments, the processing unit 104 may apply time-based sampling windows for each of the inputs IN1 and IN2. For example, the signal at IN1 may only be evaluated during periods when the first switching unit 102 is in the disconnected state, thereby minimizing the risk of false positives due to leakage or capacitive effects. Similarly, sampling at IN2 may be synchronized with switching transitions to provide accurate detection of inrush or sustained current flow. Alternatively, in some embodiments it may be possible to provide both the first sensing unit 108 and the second sensing unit 110 to a single shared analog input of the processing unit 104. In such cases, the processing unit 104 may rely on its internal knowledge of the switching state of the first switching unit 102 to determine which signal path is currently active and therefore interpret the shared signal accordingly. Such an implementation may be advantageous in resource-constrained designs, or when using microcontrollers with limited analog input channels.

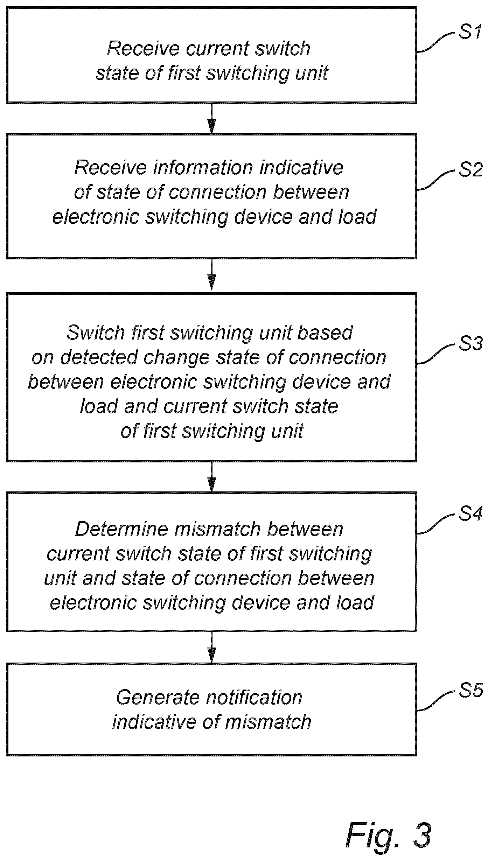

Turning finally to Fig. 3, which presents a flow chart illustrating the general steps performed by the electronic switching device 100 for identifying operational states of the load 150. As illustrated, the process begins with the system receiving, S1, the current switch state of the first switching unit 102, which state reflects the most recent actuation command issued to the switching unit 102, either from a user, a control system, or an automation rule.

Next, the processing unit 104 receives, S2, information indicative of the current state of connection between the electronic switching device 100 and the load 150. As described earlier, such information may originate from the first sensing unit 108 detecting current when the first switching unit 102 is in the disconnected state, or from the second sensing unit 110 monitoring current through the first connection during the connected state.

Based on the state of the first switching unit 102 and the received connection information, the processing unit 104 may then proceed to switch, S3, the first switching unit 102. Such a step may preferably be conditional and may be used to, for instance, synchronize the state of the first switching unit 102 with an externally detected load activation (for example from the manual switch 152), or to override automated switching behavior when unexpected usage is detected. Additionally, a detected change in the state of the external switch 152, for example, a transition from off to on, may be interpreted as a valid user request to also transition the state of the first switching unit 102, thereby ensuring that the load 150 is activated through the smart device path as well. Such an implementation facilitates cooperation between manual and automated control and ensures consistent system behavior.

In parallel or as a separate evaluation, the system may optionally determine, S4, whether there exists a mismatch between the current switch state and the sensed connection state. A particularly relevant case is when the processing unit 104 attempts to activate the load 150 via the first switching unit 102, but no current is detected, for example indicating that the external switch 152 may be open and the command ineffective. Conversely, current flow may be detected even though the switching unit 102 is off, in which case external activation is inferred.

If such a mismatch is identified, the processing unit 104 may optionally generate, S5, a notification indicative of the mismatch. This notification may be transmitted via the transceiver 106 to an external system, user interface, or logging server. Depending on system configuration, such notifications may be used for diagnostics, alert generation, or adaptive control updates. In some embodiments, the system may include configuration settings that allow a user to enable or disable mismatch detection and notifications according to preference or use case.

The control functionality of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is shown. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the present disclosure has been described with reference to specific exemplifying embodiments thereof, many different alterations, modifications and the like will become apparent for those skilled in the art. Further, a single unit may perform the functions of several means recited in the claims. In the claims, any reference signs placed between parentheses shall not be construed as limiting to the claim. Furthermore, in the claims, the word "comprising" does not exclude other elements or steps, and the indefinite article "a" or "an" does not exclude a plurality.

Variations to the disclosed embodiments can be understood and effected by the skilled addressee in practicing the claimed present disclosure, from a study of the drawings, the disclosure, and the appended claims. The person skilled in the art realizes that the present disclosure is not limited to the preferred embodiments.

## Claims

1. An electronic switching device configured to be connected to a power source and a load, the electronic switching device comprising:
a first switching unit configured to switch between a connected and disconnected state to selectively provide a first connection between the power source and the load for activating the load,
a processing unit, and
a first sensing unit connected to the processing unit,
wherein:
the first sensing unit is configured to detect whether a current is flowing through a second connection between the power source and the load when the first switching unit is in the disconnected state, and
the first connection between the power source and the load is provided separate from the second connection between the power source and the load.

2. The electronic switching device according to claim 1, wherein a flow of current through the first sensing unit indicates a state of connection between the electronic switching device and the load as connected.

3. The electronic switching device according to any one of claims 1 and 2, further comprising:
a second sensing unit connected to the processing unit,
wherein the second sensing unit is:
arranged in series with the first switching unit, and
adapted to detect whether a current is flowing through the first connection between the power source and the load when the switching unit is in the connected state.

4. The electronic switching device according to any one of the preceding claims, wherein the first sensing unit is electrically connected in parallel with the first switching unit.

5. The electronic switching device according to claim 3, wherein the second sensing unit comprises a current sensing resistor adapted to generate a voltage representative of a current flowing through the first connection when the first switching unit is in the connected state.

6. The electronic switching device according to claim 3, wherein the second sensing unit comprises a Hall-effect sensor adapted to detect a magnetic field generated by a current flowing through the first connection when the first switching unit is in the connected state.

7. The electronic switching device according to any one of the preceding claims, wherein the first sensing unit comprises a voltage divider circuit.

8. The electronic switching device according to any one of the preceding claims, wherein the processing unit is configured to determine the state of connection between the electronic switching device and the load based on whether a voltage measured by the first sensing unit exceeds a predefined threshold.

9. The electronic switching device according to claim 3, wherein the processing unit is configured to switch the first switching unit based on a detected change in the current flowing through the first connection between the power source and the load.

10. A method for operating an electronic switching device, the electronic switching device comprising:
a first switching unit configured to switch between a connected and disconnected state to selectively connect a power source and a load for activating the load,
a processing unit, and
a current sensing unit connected to the processing unit,
wherein the method comprises the steps of:
receiving a current switch state of the first switching unit,
receiving information indicative of a state of connection between the electronic switching device and the load, and
switching the first switching unit based on a detected change in the state of connection between the electronic switching device and the load and the current switch state of the first switching unit.

11. The method according to claim 10, further comprising the steps of:
determining a mismatch between the current switch state of the first switching unit and the state of connection between the electronic switching device and the load, and
generating a notification indicative of the mismatch.

12. The method according to any one of claims 10 and 11, wherein the information indicative of the state of connection between the electronic switching device and the load is derived from a current measured when the first switching unit is in the disconnected state.

13. The method according to any one of claims 10 - 12, wherein the information indicative of the state of connection between the electronic switching device and the load is derived from a current measured when the first switching unit is in the connected state.

14. The method according to any one of claims 10 - 13, wherein at least one of the receiving, determining, or switching steps is performed in an external device communicatively connected to the electronic switching device.

15. The method according to any one of claims 10 - 14, wherein determining the state of connection between the electronic switching device and the load comprises the step of comparing a measured value to a predefined threshold.
